# EUROPEAN PATENT APPLICATION

(11) **EP 2 865 533 A1**
(43) Date of publication of application: **29.04.2015**
(21) Application number: 14159094.3
(22) Date of filing: 12.03.2014
(51) Int. Cl.: B42D 1/00, G09B 19/00

(54) **System of illustration**

(30) Priority: 25.10.2013 IT VR20130047 U
(71) Applicant: Campacci, Antonio, 37024 Arbizzano Negrar (VR) (IT)
(72) Inventor: Campacci, Antonio, 37024 Arbizzano Negrar (VR) (IT)
(74) Representative: Fisauli, Beatrice A. M.

(57) **Abstract**

The present invention refers to a system of illustration to make what is represented in an image or photograph more easily understandable. In particular, this system of illustration is effective if utilized preferably in the scientific, in particular medical, field. The system of illustration (may be a book or other paper support or electronic support) comprises transparent sheets which are used to superimpose on a picture additional information (signs, words, pictures).

## Description

The present invention refers, in general, to a system of illustration to be utilized preferably in the scientific field, especially in the working and instructive context, in particular in the medical field. More particularly, the present invention refers to a system of illustration that allows to make an image more explanatory, whether it be a photograph or a generic figure.

As is known, several teaching tools for presentation and teaching, such as books, are used in the scientific field, in particular in the botanic, veterinary and medical field, for the instruction of students, as well as botanists, veterinarians and physicians, and generic health workers as well, said books being provided with several photographs of the human or no-human body, especially photographs of the parts to be studied.

The substantial use of photographs has the purpose of making the studying and learning as close as possible to the practical case so that the professional, for instance a physician, will be ready when facing the real case. Of course, unlike the reconstructed images, the photographs are not easy to read and understand in the initial stages of learning. For instance, the various parts of the body such as tissues, nerves, tendons, muscles may be confused with each other or may be hidden, partially or completely, by other parts.

In order to make the photographs more understandable, the photographs are usually provided with arrows indicating the part to be highlighted with possible reference to captions on the side of the photograph. However, in this way the reader is forced to repeatedly move the view and the attention from the photo to the caption. Besides, the arrows and the relative indications could hide, albeit for very small portions, human body parts of interest to the professional. Alternatively, the prior art discloses that the one or more parts of interest are colored so as to be immediately recognized and identified. It is evident how this technique may make the comprehension faster on the one side, but on the other side, this technique alters the photograph and makes the photo more distant from the real situation.

An aim of the invention is to remove the above problems and other ones through the realization of a system of illustration, for instance on a teaching support, utilizing photographs so as to represent a real situation without altering and modifying the photographs.

Another aim of the invention is to carry out a system of illustration that makes the photographs used for the learning immediately comprehensible.

Another aim of the invention is to offer a system of illustration that is easy and practical to be used.

The aforesaid aims and others are reached according to the invention through a system of illustration on a support, for instance a support for teaching, for applications in the scientific field, for instance the medical one, and comprising at least one picture, for instance a photograph, of a part of a body, for instance a plant or animal, in particular human, body, in which at least one element of interest of the human body, such as tissues, nerves, tendons, bony portions, muscles, etc., is represented.

The system of illustration is characterized by the fact that said support comprises at least one transparent sheet on which at least one sign such as a figure or phrase supplying at least one piece of information is applied. The system of illustration provides that when the transparent sheet is superimposed on the picture, the one or more signs are superimposed on the one or more elements of interest so that a piece of information corresponds to a corresponding element of interest.

In this way, the system of illustration according to the invention allows the picture to remain intact and faithful to reality without indications or phrases applied thereon. At the same time, the user, for instance a reader, in case the support is a book, can easily recognize the various elements represented in the picture by simply applying the transparent sheet on the photograph. Advantageously, the system of illustration according to the invention may provide that the one or more signs comprise at least one figure representing the element of interest to which said figure corresponds, so that the superimposition of said figure on the element of interest to which said figure corresponds, when the transparent sheet is superimposed on the picture, makes the form, dimensions and position of the element of interest clear. Besides, the system of illustration according to the invention may provide that the one or more signs comprise at least one indication, for instance a word or phrase, corresponding to the element of interest to which said indication corresponds; in this way, since the indication is related to the corresponding element of interest, when the transparent sheet is superimposed on the picture, the indication may supply the name and/or a description of the element.

Advantageously, the support may comprise two or more transparent sheets, each sheet being provided with the relative printed signs so as to supply various pieces of information according to the choice of the user.

Besides, the system of illustration according to the invention may provide that at least one sign printed on the transparent sheet illustrates an element not represented in the picture. This feature allows to represent and make clear the presence of one or more elements in the body part under analysis which are not visible in the photograph since they are covered.

Advantageously, the support may be a paper support or an electronic support.

Further features and details of the invention will be better understood from the following description that is supplied as a non-restricting example as well as from the accompanying drawings wherein:
Figure 1 is a schematic axonometric view of a booklet that utilizes the system of illustration according to the invention;
Figure 2 is a schematic axonometric view of the booklet in figure 1, open to the page chosen;
Figure 3 is a schematic axonometric view of the booklet in figure 1, open to the page chosen, on which a transparent sheet is about to be superimposed;
Figure 4 is a schematic axonometric view of the booklet in figure 1, open to the page chosen, on which the transparent sheet is completely superimposed.

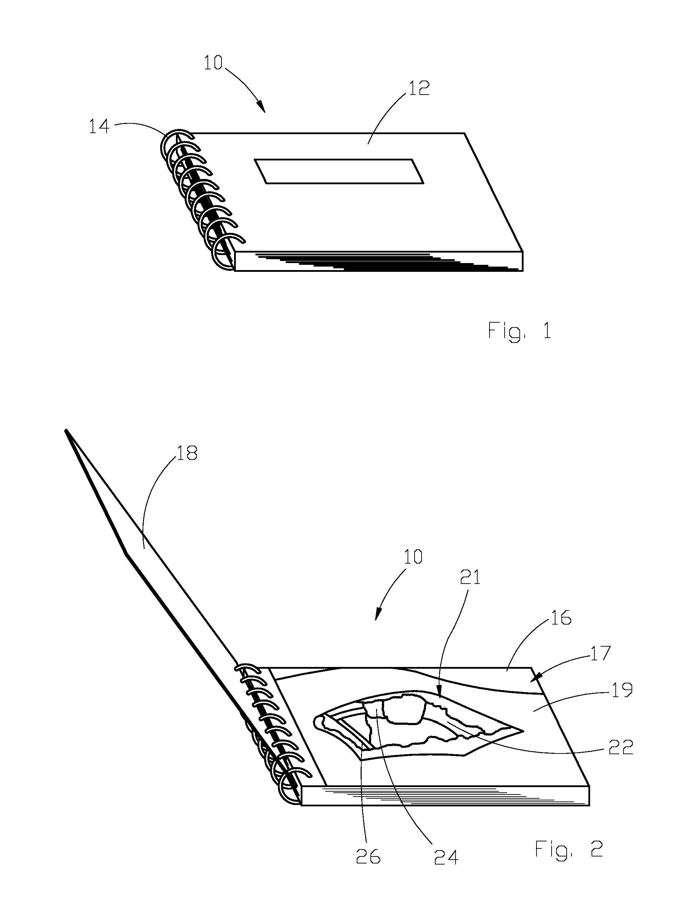

With reference to the accompanying figures, in particular figure 1, number 10 denotes a booklet to be utilized as a teaching tool in medical field, which booklet comprises a particular system of illustration according to the invention.

In the illustrated case, the booklet 10 contains information on a surgical technique but obviously, the booklet could contain pieces of information of other arguments, in whatever field, in particular in the medical and paramedical one.

The booklet 10 comprises a set of pages including the cover 12 as visible in figure 1, all the pages including the cover being assembled together by means of a spiral binding 14.

More particularly, the booklet 10 comprises also a first page 16 which is inserted after a transparent sheet 18 and a second page 20. In figure 2, the booklet 1 is open to the first page 16.

A photograph 17 is affixed on the first page 16. This photograph shows a human body portion 19 which is undergoing surgery and is, therefore, open in the specific surgery area 21.

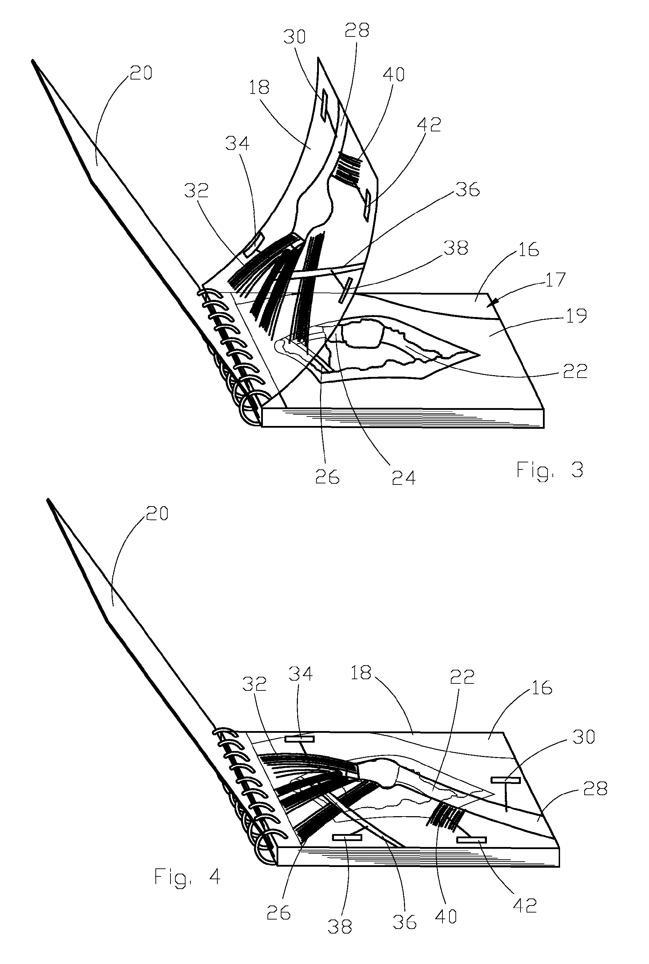

In the surgery area 21, the human body portion 19 comprises several elements such nerves, muscles, tendons, bony portions, some of which are represented in figures 2 and 3. Such elements are generically defined as first element 22, second element 24 and third element 26.

The transparent sheet 18 shows schematic representative figures some of which are indicated in figure 3, and specifically a first figure 28, a second figure 32, a third figure 36 and a fourth figure 40.

Said figures 28, 32, 36, 40 are provided with explanatory indications, in particular arrows and notes, which are associated to each other and schematically represented in the figures by means of a rectangle and are related to the above listed figures, specifically and respectively: a first indication 30, a second indication 34, a third indication 38 and a fourth indication 42.

When the transparent sheet 18 is put on the first page 16 as it appears in figure 4, the various figures 28, 32, 36 are arranged on the various elements 22, 24, 26.

More precisely, the first figure 28 with the relative first indication 30 is arranged on the first element 22, the second figure 32 with the relative second indication 34 is arranged on the second element 24, the third figure 36 with the relative third indication 38 is arranged on the third element 26. Accordingly, it is evident how the elements 22, 24, 26 represented in the photograph 17, some of which could be hardly identified by a still inexperienced user of the booklet 10, are clearly represented, and in particular correctly disposed, by means of figures 28, 32, 36.

In the illustrated case, the fourth figure 40 with the relative fourth indication 42 does not correspond to any element into view in the photograph 17. In fact, the fourth figure 40 is used to show the appearance, the dimensions and the position of an element, such as a nerve, a tendon, a muscle, etc., covered by other portions of the human body and not visible in photograph 17.

The indications 30, 34, 38, 42 give the name of the element to which said indications refer. Alternatively, such indications may supply pieces of information about said element.

The system of illustration according to the invention allows that any user of the booklet 10, whether the user is, for instance, a medical expert or a medical student in learning, can easily find the position of the various elements of interest inside of the surgery area 21 and at the same time, the user can immediately identify such elements by means of the indications 30, 34, 38, 42.

Besides, the system of illustration according to the invention allows to keep the reference photograph 17 intact so that the user of the booklet 10 may always visualize the surgery area 21 as in the real case during a surgery.

In addition, the system of illustration allows to indicate the presence of protrusions although such protrusions are not directly visible in the photograph because such protrusions are covered.

A technician of the sector may conceive changes or variants that are to be considered as included in the scope of protection of the present invention.

For instance, the booklet may comprise more transparent sheets that overlap each other so as to supply other pieces of information according to the choice of the user.

Finally, the system of illustration may also be applied on supports different from the so-described booklet. For instance, the system of illustration may be applied not only on paper supports but also on electronic supports.

## Claims

1. System of illustration on a support (10) comprising at least one picture (17) of a part of a body (19), in which at least one element (22, 24, 26) of interest of the body (19) is represented, **characterized by** the fact that said support (10) comprises at least one transparent sheet (18) on which at least one sign (28, 30, 32, 34, 36, 38, 40, 42) indicating at least one piece of information so that when the transparent sheet (18) is superimposed on the picture (17), the at least one sign (28, 30, 32, 34, 36, 38, 40, 42) is superimposed on the at least one element (22, 24, 26) of interest so that the at least one piece of information corresponds to the corresponding element of interest.

2. System of illustration according to the preceding claim, wherein the at least one sign comprises at least one figure (28, 32, 36) representing the at least one element (22, 24, 26) of interest to which said figure corresponds, said at least one figure (28, 32, 36) being superimposed on the at least one element (22, 24, 26) of interest to which said figure corresponds when the transparent sheet (18) is superimposed on the picture (17).

3. System of illustration according to one of the preceding claims, wherein the at least one sign comprises at least one indication (30, 34, 38) of the at least one element (22, 24, 26) of interest to which said indication corresponds, said at least one indication (30, 34, 38) being related to the at least one element of interest to which said indication corresponds when the transparent sheet (18) is superimposed on the picture (17).

4. System of illustration according to one of the preceding claims, wherein two or more transparent sheets are comprised.

5. System of illustration according to one of the preceding claims, wherein at least one sign (40, 42) illustrates an element not shown in the picture (17).

6. System of illustration according to one of the preceding claims, wherein said support is a book (10).

7. System of illustration according to one of the preceding claims, wherein said support is a paper support.

8. System of illustration according to one of claims 1 to 6, wherein said support is an electronic support.
